# EUROPEAN PATENT SPECIFICATION

(11) **EP 1 628 211 B1**
(45) Date of publication and mention of the grant of the patent: **07.01.2015**
(21) Application number: 05076658.3
(22) Date of filing: 19.07.2005
(51) Int. Cl.: G06Q 10/00

(54) **Method for providing a user interface**
Verfahren zum Bereitstellen einer Benutzerschnittstelle
Méthode pour fournir une interface utilisateur

(30) Priority: 19.07.2004 EP 04016964
(43) Date of publication of application: 22.02.2006
(73) Proprietor: SAP SE, 69190 Walldorf (DE)
(72) Inventor: Beringer, Joerg, 60431 Frankfurt (DE); Hatscher, Michael, c/o SAP AG, D-69190 Walldorf (DE); Nieves, Sandra, 76137 Karlsruhe (DE); Wood, Eric, Menlo Park CA 94025 (US); Moore, Dennis, Burlingame Californie 94010 (US)
(74) Representative: Müller-Boré & Partner Patentanwälte PartG mbB

(56) References cited:
- US-A1- 2004 119 752

## Description

The invention relates to a computer implemented method for providing a user interface for running a plurality of business processes, wherein process data are handled in data objects by one or more service oriented business applications run on a computer.

Applications for running business processes are traditionally very diverse in layout. Hence in working with these applications, a user is confronted with a variety of different design philosophies which makes every day's work very hard since one has to switch constantly from business application to business application and from a corresponding application interface to another while performing a particular role in the work process. Furthermore, these diverse layouts prevent a consistent overall views and actions to be undertaken in business situations that are present at real time instances, in particular, views on different work-roles of persons active in said situations and their corresponding activities, the process instances of certain business processes that need monitoring, and business object instances of certain business items that are being handled in these business processes.

US 2004/119752 A1 relates to systems and techniques relating to associating a procedure with actions and resources. In general, in one implementation, the technique includes: specifying a list of one or more actions corresponding to a specified procedure and, for each action, one or more resources associated with the action; indicating an action order, including indicating whether two or more actions in the action list are to be performed in an order-dependent manner or in an order-independent manner; formatting the list of actions into a presentation format; and enabling a user to access the resources associated with the specified procedure. The actions can be grouped into one or more phases and a navigation model may include a phase indicator to navigate by phases of the procedure and display of actions and deliverables associated with a phase. The techniques can include associating deliverables, contributors and resources with an action. A display can be provided for tracking the status of deliverables, contributors, resources or the completion of the procedure.

It is desirable to provide a well structured user interface providing coherent screens that reflect the work practice of the user in order to provide good user experience. It is also desirable to structure applications in units of contexts that reflect some meaningful chunk of work, typically a role responsibility or an instance of work.

Accordingly, the invention provides a method according to the features of claim 1. In particular, a consistent interface is provided that is directly reflecting the business context a user is interested in, by providing a generalized information architecture for presenting modelled business situations, including work-roles, process instances, and business object instances for handing said data objects active in said plurality of business processes; providing an interface generator for directly generating a user interface from the generalized information architecture; and providing said user interface by said interface generator while identifying a particular instantiated business situation as a business context to which said user interface provides said interface.

In this way, specific aspects of a business situation can be presented within a single context. This interface is also referred to as showing floor plans or contextual floor plans of particular business situations and offers a view mode and/or an action mode, providing a specific view on said business context or a specific action to be performed in said business context, and wherein said interface provides navigation between different business contexts.

The floor plans may consist (among other components) of a left-hand Contextual Panel that support the within-navigation, and a right hand service container which is used to launch views and actions in-place. This page layout together with a standardized information architecture for the Contextual Panel can be applied to different archetypes of business context such as roles, process instances, object instance views, ad-hoc activity spaces, event resolution centers.

The Contextual Panel may come with standardized components for switching views on a context, for contextual search, and for launching in-place actions. An Instance Identifier component and a mini-dashboard informs the user about the identity and status of the currently selected work instance, e.g. the name of an business object or process instance.

The contextual floor plans are used to generate user experience based on meta data that model a business context instead of hard wiring them into a page layout description. Contextual Floor plans represent major building blocks of application design with a high potential of re-use. They harmonize user experience across and within applications

The invention will be further elucidated by referring to the various drawings. In particular:
Figure 1 shows a basic user interface layout for the interface according to the invention showing a contextual floor plan;
Figure 2 shows a specific contextual floor plan showing an object centric view;
Figure 3 shows a specific contextual floor plan showing an process centric view;
Figure 4 shows a specific contextual floor plan showing an activity centric view; and
Figure 5 shows a variety of contextual panels for use in a contextual floor plan.

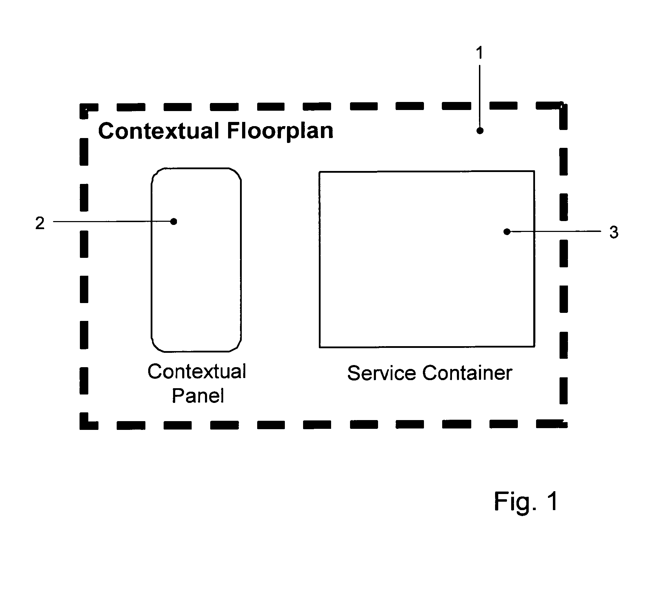

Referring to Figure 1, for simplifying the task of layouting a number of complex business applications into coherent focus areas, the invention provides a context-based application design concept by offering pre-defined contextual floor plans for the most common types of work context. A Contextual Floor plan 1 consists of a left hand Contextual Panel 2 that provides consistent navigation and access to contextual actions and views, and a right hand container or content area 3 for launching such views and actions in-place.

The floor plan 1 illustrated in Figure 1 provides a consistent interaction paradigm for many fundamental context types that one typically finds in a business application. In particular, the right hand container 3, is arranged to provide a user interface to a number of context archetypes which reflect the most common work contexts. Some of them are activity oriented and others are work instance oriented. In particular, these archetypes can be categorized as follows:
- Activity-centric contexts. This context is driven by a role, topic, task, or event that triggered this activity. Depending on the specific type certain actions and resources are meaningful to this context and can be pre-configured as a context template. Activity-centric contexts usually have typical views like work lists, work status dashboards, resources, participants, and so on.
- Object-centric contexts. This context is determined by an object instance and includes related object operations as well as views on all facets on the object. Different job roles may be interested in different facets of the same object type.
- Process-centric contexts. This context is a workflow instance. Most actions are executed as predefined process steps. Because of the nature of workflow, selected steps may be owned by different users.

In short, in work instance oriented contexts, a number of views or perspectives is presented showing various aspects of a particular business situation, in particular, a particular object instance related to said situation or a particular process instance related to the situation.

Important characteristics of a view are the following
- View are not transactional. They do not need any close, cancel, or done buttons. However, they may include functions within their UI that launch transactional actions.
- Views always stay within the same context. The user experience is not navigation but rather changing the perspective.

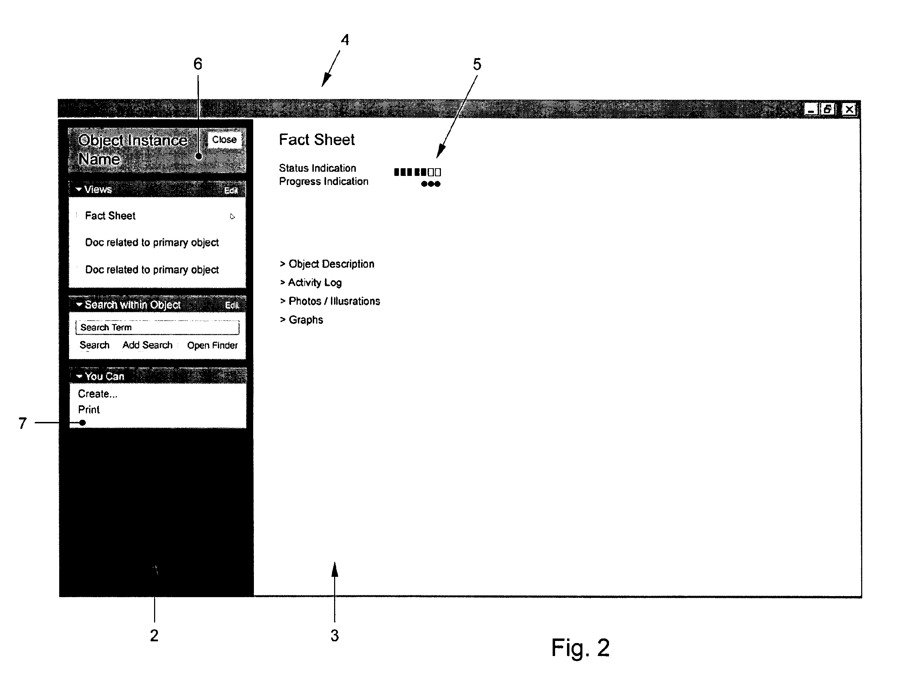

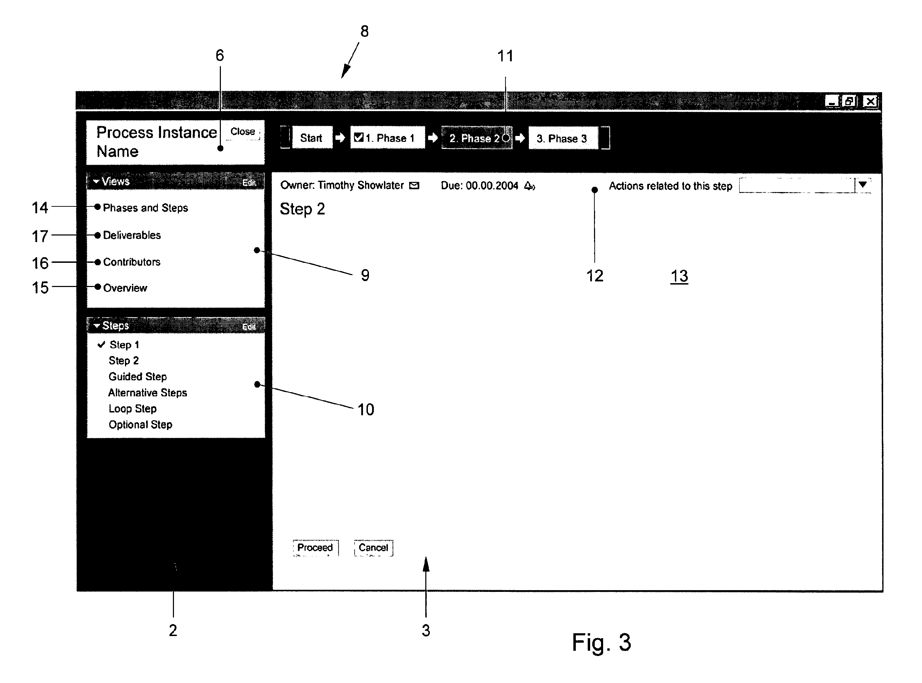

In this way, within a single context, a user can switch to different views for different purposes of assessing the context as will be further elucidated with reference to Figure 2 and Figure 3.

In contrast, in activity oriented work contexts, a user role is central of a specific user who has to perform certain activities in a certain work context. In addition, certain activities, while not directly related to a specific role in the organization, can be centralized around a specific business situation that arises, such as exception handling or other incidental tasks that may have to be performed in a business. Rather than being assigned to certain job roles of users in a business and the bundle of tasks related to said job roles, these contexts can models an ad-hoc activity space that is focused on a specific business problem or a specific task.

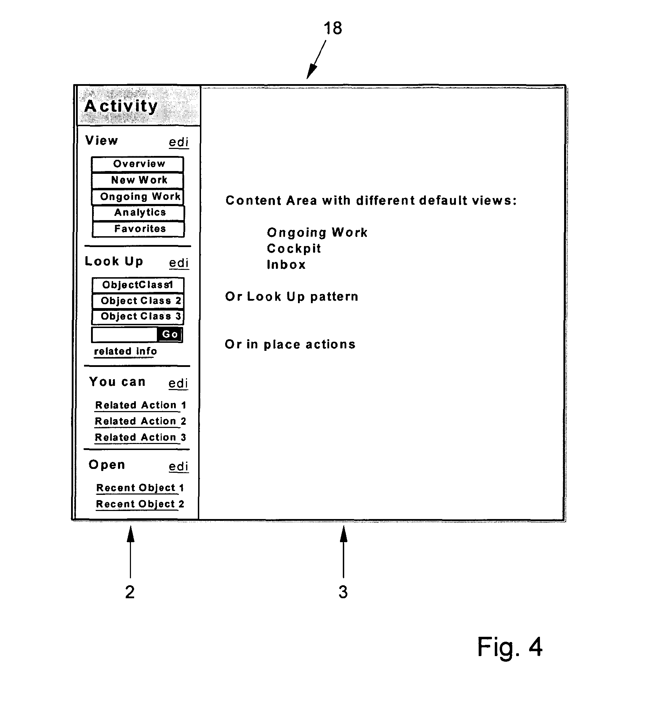

In browsing such a context, the Context Panel 2 lists actions that are relevant for the current work context. In contrast to views, actions are transactional and may even point to another related work context. Whenever possible, actions should be launched in-place in the right hand container as will be further elucidated with reference to Figure 4.

For example, a product manager may work in the context of one particular product or one particular product concept. Inspecting one particular product can be considered as an object-centric work focus. However, the development of a new product concept is driven by a well defined process that models best practices and has stages and gates. The dominant focus in this case is on the process. In addition, the product manager is responsible for monitoring sales performance and is therefore from time to time doing market analysis. This is a work context that is driven by a role responsibility and is not focusing on a particular object or process instance. It is, therefore, a general activity centric context.

In Figure 2 an Object Instance View 4 is shown which provides a view on one specific object instance. In this view different facets of the business object are presented. In addition, possible actions that are listed are actions related to this object.

The Object Instance View 4, as a contextual view, can be activated from either an overview screen (not shown) presenting various selectable context views or through an object lookup action wherein certain object characteristics are input for looking up said object. In an Object Instance View, the focus lies on a concrete instance, the user operates on one particular instance of a business object.

In the object-centered mode - the Object Instance View, the user may choose between different views (perspectives) on a concrete instance of a business object consisting of a "fact sheet"-like overview 5 and detailed views of different facets of the object. All functionality to manipulate and act on the object are provided.

According to the contextual views user interface layout of the invention, the Object Action Pattern's layout features a Contextual Panel 2 (CP) with an area for the instance identifier 6, global instance-related and action-related contextual (secondary) actions 7, as well as a content area 3 which displays the object's facets, or actions as chosen from the Contextual Panel or from within a preceding action screen.

In particular, in Figure 2 a Fact Sheet View of an Object Action Pattern is shown. In the Object Instance View different perspectives on the object can be presented:
- a Class Name view displays the master data of this object type. If required those data may be grouped into several tabs as indicated by the figure.
- a Summary view displays a snapshot of this object with the most essential data. This is like a fact sheet or the overview page. It should inform the user about the basic facts and state of the object.
- a Status view provides status indicators as well analytics about this object.
- a Facet views provide specific perspectives on the object that represent a kind of sub-activity in itself. When user switch to a facet they also focus on managing a specific sub-aspect of the object.

Which of these views are appropriate to include into the object instance view depends on the characteristics of the particular object type. In addition to the here above discussed fact sheet view, a Main Data view provides access to the main data of an object. If the amount of data does not fit on one screen, those data can be grouped by topic or any other intuitive category and displayed on tabs. While the Fact Sheet is for quick inspection and not for editing, this view is a read and write view to maintain the main data of the object instance - typically the master data.

Furthermore, Object-specific perspective views can be presented as "Facet views". For complex objects, such additional views may be implemented, each representing a facet of the object. For example, foreign key relationships to other objects are candidates to let users manage such related data within a separate view. For example, all orders related to a supplier, or all attachments related to a product concept would be candidates for facets.

Such additional views are justified if the views represent a primary facet of the object with related actions. In other words, the facet becomes a sub-activity area for one particular aspect of the object. A facet of an object-centric view could be other documents related to the primary object. These other documents are shown in the content area, when clicking on the corresponding view.

In addition, occasional tasks should be implemented as "You Can" actions.

Referring to Figure 3, a Process Instance view 8 provides an overview on the process in form of phases and steps, and several status views on the process instance. In this view a series of predetermined process steps (also referred to as Guided Procedures) are used for managing collaborative procedures that are defined in form of a workflow model and context information.

In particular, in this view, the contextual panel 2 contains an Instance Identifier 6, a Views Area 9, and a Guided Procedure Step Tree 10. The content area 3 features top to bottom the following elements: the Phase Indicator 11 and the Status Bar 12 as well as the area 13 containing the action, which takes up most of the screen real estate.

In this Guided Procedures view different perspectives are presented on the process or its objects:
- The "Phases and Steps" process view 14 shows each step for the current phase; when selected, the corresponding action is shown in the content area. This view supports the user in working through the steps of the process.
- The Overview 15 shows all phases with all their steps, the current status, and the owner of the step on one page. The overview gives at-a-glance information about the status of the procedure and its objects.
- The Contributors 16 view shows all contributors involved in the procedure, which parts of the process they are involved in, and what their contributions are. Collaboration features in this view allow users to get in touch quickly with other contributors, push information to them, or replace them with someone else if need be.
- The Deliverables 17 view lists all output of each step that has been completed so far. This view is particularly beneficial for processes that orient themselves around deliverables tracking rather than a timeline or sequence of steps to complete.

Additionally, a Timeline view (not shown) may show the procedure along a timeline, making due dates and time frames more prominent. This view is particularly beneficial when milestones and deadlines are the focus.

Besides the standard overview of "Phase and Steps" 14 that is guiding the user though the process, additional standard views can be provided for tracking the progress, for collaborating among all contributors, and for managing the proves by deliverables.

For example, the "Deliverables" view 17 provides functions to track and manage deliverables that are associated with a process instance. The view lists the status, and the responsible user. The view also supports related tasks like task assignment and document check in and versioning control.

In addition, the "Contributors" view 16 opens a list of all the people participating in a given process instance. It offers related ad-hoc collaboration tools to coordinate and communicate with all participants. A process owner can assign tasks to selected users as well as add and remove contributors and assess a single person's contribution to the overall process.

Figure 4 illustrates an example of a contextual view with an activity centric context, wherein the screen is illustrated as a template having generic controls. When instantiated, these controls are "filled" with relevant data from an activity context. In this application, these views are referenced as Work Centers since these are activity-centric places that provide all services necessary to accomplish a set of coherent actions belonging to one of the user's roles. Like switching rooms in a house, each Work Center 18 serves a different role by providing all relevant views for tracking, analyzing, and monitoring work.

The left-hand pane of the Work Center 18 is as each contextual view provided by a Contextual Panel 2 and contains standard tools and functions for controlling the interface and accessing work objects. In addition, the right pane 3 provides a place to do the action selected on the left.

Like Work Centers, ad-hoc Activity Centers are activity-centric places that bundle functions required to accomplish a business goal. But in contrast to Work Centers, it does not reflect a bundle of tasks related to job roles, but rather models an ad-hoc activity space that is focused on a specific business problem or a specific task. Activity Centers are instances of complex tasks that require a persistent activity space to accomplish the task.

Examples of ad-hoc Activity Centers are problem resolutions spaces that require some long running processes for diagnose purposes and that resolution strategies that are not just a one click actions but a process in its own. For example, let's assume that a person is monitoring invalid invoices and receives an exception notification in his or her inbox. When opening the notification message, an ad-hoc Activity Center is launched that offers within its Contextual Panel 2 various options to inspect and resolve the problem.

From the interaction design point of view, Work Centers and Activity Centers are almost identical except that Activity Centers include options and actions that may close the entire Activity Center or change the status of it.

Depending on the complexity of a task, exception, or work item, it may or may not be appropriate to model the resolution as an Activity Center. It may also be adequate to design a quick action that just lets the user choose between a limited set of option or asks the user to enter new data in order to solve a problem. For example, a simple approval request only requires a simple one-screen interactive message and not a complex activity center.

In the context of activities whether ad-hoc or relating to a work center, most views are providing work support like
- Work Trigger Management: Parsing business related work items, exceptions, requests, tasks and react to them in an appropriate way
- Status Tracking: Monitoring important business activities, pending ad-hoc processes, tasks in work by means of textual or graphical status displays.
- Time Management: Getting a consolidated overview about any time-related business event in order to schedule and plan activities.
- Activity Management: Accessing and overseeing standard work contexts (Work Centers deployed as work sets) and personal work contexts (ad-hoc Activity Centers instantiated by users)
- Service Gallery: Accessing self-services, procedures, or reports from a single place

As discussed previously, single actions are launched in-place wherever possible. The idea is that once users launched a new work context, they continue to work within this context without leaving this context. This user experience is achieved by keeping the Contextual Panel 2 constant and launching the activities in-place in the right hand service container. Within the contextual navigation concept, such actions should run in-place next to the Contextual Panel 2 as long as they are not sovereign applications that need full screen real-estate. The idea is that actions can be re-used as task building blocks in any context.

The action framework handles the actual interaction with a single service or software application. Its design depends very much on the specific content of the application, but the action framework standardizes the basic appearance and details of actions.

A number of action categories are discerned:
- a simple action. This is a one-screen service that is focused on one work intent. It features a standard title elements that describes this action's intent in form of a verb-noun phrase. The action's intent should be explained in a one sentence phrase below the title.
- a guided action. The "Guided Action" action floor plan is a framework for navigating through a sequence of screens. Guided Actions either sequentialize user interface interaction into smaller chunks, or concatenate several stand-alone actions into a composite action.

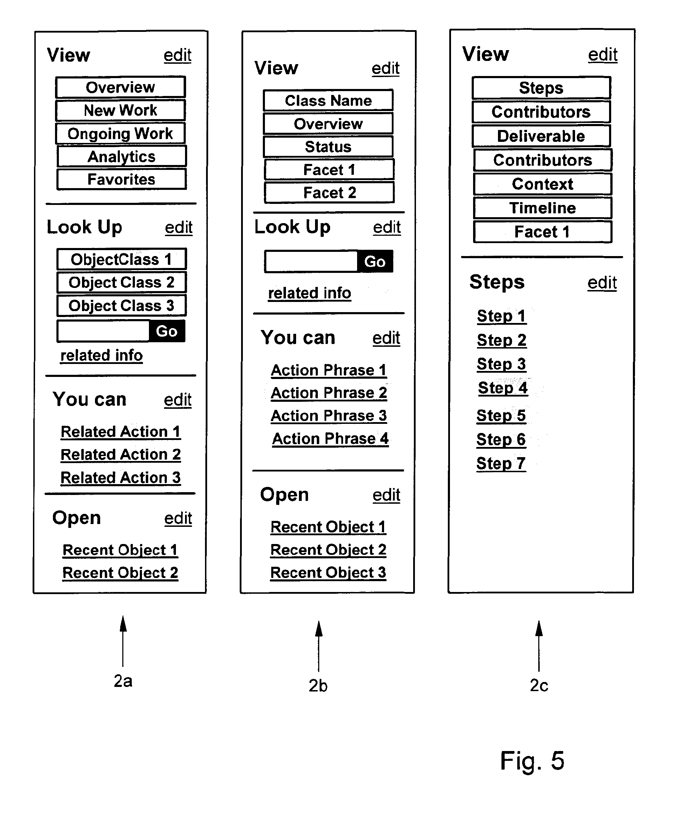

Referring to Figure 5 a number of appearances are illustrated for the Contextual Panel. These panels have a consistent structure, with defined elements that repeat across the different context types. But depending on the context archetype the information architecture of the Contextual Panel 2 is slightly different. In particular, Figure 5a) shows a contextual panel for an activity Center, Figure 5b) shows a contextual panel for an Object Instance View and Figure 5c) shows a contextual panel for a Process Instance View

In all cases, the Contextual Panel provides view switches to select different facets of the current work context. They are basically a toolset to divide complex function into several intuitive chunks. The switches navigate between different views of the same context. Each view, when activated, may replace subordinate content in the Context Panel, the related actions for example.

Although the same generic control and layout is used, the exact semantics vary depending on the type of work context.

As described with reference to Figure 4 in conjunction with Figure 5a), the activity-centric views represent generic perspectives on work and are focused on one particular work role of a user using the user interface. They also may represent secondary activity centers that require their own set of actions.

As described with reference to Figure 2 in conjunction with Figure 5 b), Object-centric Views provide different views on a given object. They entirely depend on the type of object and reflect natural perspectives on that object. Each perspective may come with its own set of actions and by that represents a little activity center with focus on one concrete object instance.

As described with reference to Figure 3 in conjunction with Figure 5c) Process Instance Views provide are generic process tracking and execution views provided by the Guided Procedure framework. Those views can be extended by tailored views depending on the semantics of the procedure.

## Claims

1. A computer implemented method for providing a user interface for running a plurality of business processes, wherein process data are handled in data objects by one or more service oriented business applications run on a computer, the method comprising:
- providing a generalized process data information architecture for presenting modeled business situations, including work-roles, process instances, and business object instances for handling said data objects active in said plurality of business processes;
- providing an interface generator for directly generating a user interface from the generalized information architecture; and
- providing said user interface by said interface generator while identifying a particular instantiated business situation as a business context in said generalized information architecture to which said user interface provides said interface,
wherein further said business context is displayed by said interface in a view mode and/or an action mode, said modes providing a specific view on said business context or a specific action in said business context, and wherein said interface provides navigation between different business contexts.

2. A computer implemented method according to claim 1, wherein said view mode comprises an object centric view mode and/or a process centric view mode.

3. A computer implemented method according to claim 1, wherein said action mode provides an activity centric view of context specific activities and/or ad hoc activities to be performed in said context.

4. A computer implemented method according to claim 3, wherein said activity centric view provides a simple activity or a composite activity.

5. A computer implemented method according to claim 4, wherein said composite activity is a guided action wherein a sequence of screens is activated each for performing a part of said complex activity.

6. A computer implemented method according to claim 1, wherein said interface is generated from said information architecture using meta data that model said business context.

7. A computer for running one or more service oriented business applications for providing a user interface for running a plurality of business processes, wherein process data are handled in data objects, the computer being arranged for:
- providing a generalized information architecture for presenting modeled business situations, including work-roles, process instances, and business object instances for handling said data objects active in said plurality of business processes;
- providing an interface generator for directly generating a user interface from the generalized information architecture; and
- providing said user interface by said interface generator while identifying a particular instantiated business situation as a business context in said generalized information architecture to which said user interface provides said interface.

8. A program storage device readable by a processing apparatus, said device embodyiing a program of instructions executable by the processor to perform the steps of:
- providing a generalized information architecture for presenting modeled business situations, including work-roles, process instances, and business object instances for handling said data objects active in said plurality of business processes;
- providing an interface generator for directly generating a user interface from the generalized information architecture; and
- providing said user interface by said interface generator while identifying a particular instantiated business situation as a business context in said generalized information architecture to which said user interface provides said interface.

## Patentansprüche

1. Ein computerimplementiertes Verfahren, zur Bereitstellung einer Benutzerschnittstelle, um eine Vielzahl an Business-Prozessen auszuführen, wobei Prozessdaten in Datenobjekten durch eine oder mehrere Service-orientierte Business-Anwendungen gehandhabt werden, die auf einem Computer ausgeführt werden, wobei das Verfahren Folgendes umfasst:
- bereitstellen einer generalisierten Prozessdaten-Informationsarchitektur, um modellierte Businesssituationen vorzustellen, einschließlich Rollen im Arbeitsumfeld, Prozessinstanzen, und Business-Objekt-Instanzen zur Handhabung der genannten Datenobjekte, die in der genannten Vielzahl an Business-Prozessen aktiv sind;
- bereitstellen eines Schnittstellen-Generators, um aus der generalisierten Informationsarchitektur eine Benutzerschnittstelle direkt herzustellen; und
- bereitstellen der genannten Benutzerschnittstelle durch den genannten Schnittstellen-Generator und gleichzeitig identifizieren einer bestimmten instanziierten Businesssituation als Business-Kontext in der genannten generalisierten Informationsarchitektur, für die die genannte Benutzerschnittstelle die genannte Schnittstelle bereitstellt,
wobei ein weiterer genannter Business-Kontext durch die genannte Schnittstelle in einem Ansichtsmodus (*view mode*) und/oder einem Aktionsmodus (*action mode)* dargestellt wird, wobei die genannten Modi eine spezielle Sicht auf den genannten Business-Kontext oder auf eine spezifische Aktion im genannten Business-Kontext anbieten, und wobei die genannte Schnittstelle eine Navigation zwischen verschiedenen Business-Kontexten bietet.

2. Ein computerimplementiertes Verfahren nach Anspruch 1, wobei der genannte Ansichtsmodus einen objektzentrierten Ansichtsmodus und/oder einen prozesszentrierten Ansichtsmodus umfasst.

3. Ein computerimplementiertes Verfahren nach Anspruch 1, wobei der genannte Aktionsmodus eine aktivitätszentrierte Ansicht von kontextspezifischen Aktivitäten und/oder ad hoc Aktivitäten bereitstellt, die im genannten Kontext auszuführen sind.

4. Ein computerimplementiertes Verfahren nach Anspruch 3, wobei die genannte aktivitätszentrierte Ansicht eine einfache bzw. einzelne Aktivität oder eine zusammengesetzte Aktivität bereitstellt.

5. Ein computerimplementiertes Verfahren nach Anspruch 4, wobei die genannte zusammengesetzte Aktivität eine geführte Aktion ist, wobei eine Sequenz von Bildschirmen jeweils aktiviert wird, um einen Teil der genannten komplexen Aktivität durchzuführen.

6. Ein computerimplementiertes Verfahren nach Anspruch 1, wobei die genannte Schnittstelle von der genannten Informationsarchitektur unter Verwendung von Metadaten generiert wird, die den genannten Business-Kontext modellieren.

7. Ein Computer, um eine oder mehrere Service-orientierte Business-Anwendungen auszuführen, zur Bereitstellung einer Benutzerschnittstelle, um eine Vielzahl an Business-Prozessen auszuführen, wobei Prozessdaten in Datenobjekten gehandhabt werden, wobei der Computer zu Folgendem eingerichtet ist:
- bereitstellen einer generalisierten Prozessdaten-Informationsarchitektur, um modellierte Businesssituationen vorzustellen, einschließlich Rollen im Arbeitsumfeld, Prozessinstanzen, und Business-Objekt-Instanzen zur Handhabung der genannten Datenobjekte, die in der genannten Vielzahl an Business-Prozessen aktiv sind;
- bereitstellen eines Schnittstellen-Generators, um aus der generalisierten Informationsarchitektur eine Benutzerschnittstelle direkt herzustellen; und
- bereitstellen der genannten Benutzerschnittstelle durch den genannten Schnittstellen-Generator und gleichzeitig identifizieren einer bestimmten instanziierten Businesssituation als Business-Kontext in der genannten generalisierten Informationsarchitektur, für die die genannte Benutzerschnittstelle die genannte Schnittstelle bereitstellt.

8. Eine Programmspeichervorrichtung, die durch ein Verarbeitungs- bzw. Prozessor-Gerät lesbar ist, wobei die genannte Vorrichtung ein Programm aus Befehlen verkörpert, die durch den Prozessor ausführbar sind, um die Folgenden Schritte durchzuführen:
- bereitstellen einer generalisierten Prozessdaten-Informationsarchitektur, um modellierte Businesssituationen vorzustellen, einschließlich Rollen im Arbeitsumfeld, Prozessinstanzen, und Business-Objekt-Instanzen zur Handhabung der genannten Datenobjekte, die in der genannten Vielzahl an Business-Prozessen aktiv sind;
- bereitstellen eines Schnittstellen-Generators, um aus der generalisierten Informationsarchitektur eine Benutzerschnittstelle direkt herzustellen; und
- bereitstellen der genannten Benutzerschnittstelle durch den genannten Schnittstellen-Generator und gleichzeitig identifizieren einer bestimmten instanziierten Businesssituation als Business-Kontext in der genannten generalisierten Informationsarchitektur, für die die genannte Benutzerschnittstelle die genannte Schnittstelle bereitstellt.

## Revendications

1. Un procédé mis en oeuvre par ordinateur pour fournir une interface utilisateur afin d'exécuter une pluralité de processus d'entreprise, sachant que les données de processus sont traitées dans des objets de données par une ou plusieurs applications d'entreprise orientées service exécutées sur un ordinateur, le procédé comprenant le fait de :
- fournir une architecture généralisée d'information de données de processus (*process data information architecture*) pour présenter des situations d'entreprise modélisées, y compris des rôles de travail, des instances de processus, et des instances d'objet de gestion pour gérer lesdits objets de données actifs dans ladite pluralité de processus d'entreprise ;
- fournir un générateur d'interface pour générer directement une interface utilisateur à partir de l'architecture généralisée d'information ; et
- fournir ladite interface utilisateur par ledit générateur d'interface tout en identifiant une situation d'entreprise instanciée spécifique en tant que contexte d'entreprise dans ladite architecture généralisée d'information à laquelle ladite interface utilisateur fournit ladite interface,
sachant qu'un contexte d'entreprise supplémentaire est affiché par ladite interface dans un mode affichage et/ou dans un mode action ; lesdits modes fournissant une vision spécifique sur ledit contexte d'entreprise ou bien une action spécifique dans ledit contexte d'entreprise, et sachant que ladite interface offre une navigation entre différents contextes d'entreprise.

2. Un procédé mis en oeuvre par ordinateur d'après la revendication 1, sachant que ledit mode affichage comprend un mode affichage centré sur l'objet et/ou un mode affichage centré sur le processus.

3. Un procédé mis en oeuvre par ordinateur d'après la revendication 1, sachant que ledit mode action fournit une vue centrée sur l'activité des activités spécifiques du contexte et/ou des activités ad hoc, à effectuer dans ledit contexte.

4. Un procédé mis en oeuvre par ordinateur d'après la revendication 3, sachant que cette vue centrée sur l'activité offre une activité simple ou une activité composite.

5. Un procédé mis en oeuvre par ordinateur d'après la revendication 4, sachant que ladite activité composite est une activité guidée sachant qu'une séquence d'écrans est activée respectivement pour effectuer une partie de ladite activité complexe.

6. Un procédé mis en oeuvre par ordinateur d'après la revendication 1, sachant que ladite interface est générée à partir de ladite architecture d'information en utilisant des méta-données qui façonnent un modèle dudit contexte d'entreprise.

7. Un ordinateur pour exécuter une ou plusieurs applications d'entreprise orientées service pour fournir une interface utilisateur afin d'exécuter une pluralité de processus d'entreprise, sachant que les données de processus sont traitées dans des objets de données, l'ordinateur étant agencé pour :
- fournir une architecture généralisée d'information (*generalized information architecture*) pour présenter des situations d'entreprise modélisées, y compris des rôles de travail, des instances de processus, et des instances d'objet de gestion pour gérer lesdits objets de données actifs dans ladite pluralité de processus d'entreprise ;
- fournir un générateur d'interface pour générer directement une interface utilisateur à partir de l'architecture généralisée d'information ; et
- fournir ladite interface utilisateur par ledit générateur d'interface tout en identifiant une situation d'entreprise instanciée spécifique en tant que contexte d'entreprise dans ladite l'architecture généralisée d'information à laquelle ladite interface utilisateur fournit ladite interface.

8. Un dispositif de mémoire de programme lisible par un appareil de traitement, ledit dispositif incorporant un programme composé d'instructions exécutable par le processeur pour effectuer les étapes suivantes :
- fournir une architecture généralisée d'information (*generalized information architecture*) pour présenter des situations d'entreprise modélisées, y compris des rôles de travail, des instances de processus, et des instances d'objet de gestion pour gérer lesdits objets de données actifs dans ladite pluralité de processus d'entreprise ;
- fournir un générateur d'interface pour générer directement une interface utilisateur à partir de l'architecture généralisée d'information ; et
- fournir ladite interface utilisateur par ledit générateur d'interface tout en identifiant une situation d'entreprise instanciée spécifique en tant que contexte d'entreprise dans ladite l'architecture généralisée d'information à laquelle laditeW interface utilisateur fournit ladite interface.
